# EUROPÄISCHE PATENTSCHRIFT

(11) **EP 2 655 774 B1**
(45) Veröffentlichungstag und Bekanntmachung des Hinweises auf die Patenterteilung: **17.08.2016**
(21) Anmeldenummer: 11820889.1
(22) Anmeldetag: 23.12.2011
(51) Int. Cl.: E05F 15/70, E05F 15/695, B60R 22/00

(54) **VERFAHREN ZUM ABSENKEN EINER FENSTERSCHEIBE UND KRAFTFAHRZEUG**
METHOD FOR LOWERING A WINDOW PANE AND VEHICLE
PROCÉDÉ D'ABAISSEMENT D'UNE VITRE ET VÉHICULE

(30) Priorität: 24.12.2010 DE 102010056226
(43) Veröffentlichungstag der Anmeldung: 30.10.2013
(73) Patentinhaber: Volkswagen Aktiengesellschaft, 38436 Wolfsburg (DE)
(72) Erfinder: ZAWADE, Torsten, 31228 Peine (DE); BORNGRÄBER, Ralf, 38165 Lehre (DE); WISTRACH, Michael, 38108 Braunschweig (DE)
(86) Internationale Anmeldenummer: PCT/EP2011/006541
(87) Internationale Veröffentlichungsnummer: WO 2012/084260

(56) Entgegenhaltungen:
- DE-A1- 10 338 767
- DE-A1-102007 025 517

## Beschreibung

Die Erfindung betrifft ein Verfahren zum Absenken einer Fensterscheibe nach dem Oberbegriff des Patentanspruchs 1 und ein Kraftfahrzeug nach dem Oberbegriff des Patentanspruchs 5.

Verfahren und Vorrichtungen der zuvor genannten Art sind aus dem Stand der Technik bereits bekannt. Diese lösen ein Problem, dass bei rahmenlosen Kraftfahrzeugtüren, bei denen die Fensterscheibe nicht in einem zur Kraftfahrzeugtür gehörenden Türrahmen angeordnet ist, auftritt. Bei diesen rahmenlosen Kraftfahrzeugtüren kann es im geschlossenen Zustand zu Abdichtungsproblemen im Bereich des oberen Randes der Türfensterscheiben kommen, da in diesem Bereich die Fensterscheibe mit einer Dichtung zusammenwirken muss. Bei herkömmlichen Kraftfahrzeugtüren ist diese Dichtung bereits an einem Rahmen der Kraftfahrzeugtür angeordnet. Bei rahmenlosen Kraftfahrzeugtüren ist diese Dichtung jedoch an der Kraftfahrzeugkarosserie angeordnet, so dass zum dichten Verschließen der Fensterscheibe diese nach dem Schließen der Tür in die an der Kraftfahrzeugkarosserie angeordnete Dichtung fahren muss. Hierzu muss die Fensterscheibe vor dem Schließen sowie vor dem Öffnen der Kraftfahrzeugtür um einen bestimmten Weg aus dem Bereich der karosserieseitig angeordneten Dichtung heraus bewegt werden. Diese Bewegung, auch Kurzhubabsenkung genannt, wird im Stand der Technik durch verschiedene Ereignisse ausgelöst.

So zeigt die DE 103 38 767 A1 ein Türscheibensteuerungssystem für Kraftfahrzeugtüren mit einer motorisch anheb- und absenkbaren Fensterscheibe und einem Betätigungselement, insbesondere einem Türgriff, zum Öffnen und Schließen der Kraftfahrzeugtüre, wobei bei jedem Türöffnen die Fensterscheibe um einen Kurzhub geöffnet wird. Dabei ist wenigstens ein Näherungssensor vorgesehen und/oder im Bereich des Betätigungselementes wenigstens ein berührungsempfindlicher Sensor angeordnet. Bei Annährung eines Bedieners an das Betätigungselement bzw. bei Berührung des Betätigungselementes durch den Bediener wird durch den berührungsempfindlichen Sensor ein Kurzhubanforderungssignal ausgegeben.

Des Weiteren ist aus der DE 10 2008 014 520 A1 eine Fahrzeugtür mit einer Fensterscheibe bekannt, die mittels eines Fensterhebers in einem Türkörper versenkbar ist. Bei einem Öffnungsvorgang der Fahrzeugtür ist ein definiertes Absenken der Fahrzeugscheibe von einer Ausgangsposition um einen Kurzhubweg ausführbar. Dabei ist das Absenken mittels eines Vorlaufsensors eines elektronischen Zugangsberechtigungssystems auslösbar.

Ferner ist bei modernen Kraftfahrzeugen bekannt, dass das Signal zur Auslösung des Kurzhubes von Fensterscheiben dann abgegeben wird, wenn ein Zündschlüssel aus einem Zündschloss eines Kraftfahrzeuges abgezogen wird. Durch dieses Verhalten signalisiert der Bediener, dass er das Kraftfahrzeug in Bälde verlassen möchte. In modernsten Kraftfahrzeugen, die mit elektronischen Zugangsberechtigungssystemen ausgestattet sind, kann ein Zündschloss zum Betreiben des Kraftfahrzeugs entfallen. Für derartige Kraftfahrzeuge ist eine sogenannte Start/Stop-Taste vorgesehen, mit der der Motor gestartet und auch angehalten werden kann. Für derartige, aber nicht nur derartige, Fahrzeuge ist es nötig, eine andere Möglichkeit zur Signalgebung an eine Fensterscheibenhebevorrichtung zu geben. Hier setzt die Erfindung an.

Die Aufgabe der Erfindung ist es, ein verbessertes Verfahren zum Absenken einer Fensterscheibe, sowie ein verbessertes Kraftfahrzeug mit einem Gurtschloss und einer Kraftfahrzeugtür zu schaffen. Gelöst wird diese Aufgabe durch ein Verfahren zum Absenken einer Fensterscheibe nach Patentanspruch 1 sowie einem Kraftfahrzeug mit einem Gurtschloss und einer Kraftfahrzeugtür nach Patentanspruch 5. Besonders vorteilhafte Ausgestaltungen der Erfindung betreffen die Unteransprüche.

Erfindungsgemäß wird ein Verfahren mit den Merkmalen des Anspruchs 1 zum Absenken einer Fensterscheibe vorgeschlagen, die mittels eines Fensterhebers in einem Kraftfahrzeugtürkörper nach dem Eintreffen eines Zustandssignals von einer Ausgangsposition um einen Kurzhubweg abgesenkt wird. Das Zustandssignal wird hierbei durch die Betätigung eines Gurtschlosses ausgelöst. Dadurch, dass das Gurtschloss zum Zweck der Signalgebung verwendet wird, ist in vorteilhafter Weise erreicht, dass die Fensterscheiben nur dann um einen Kurzhubweg abgesenkt werden, wenn der Kraftfahrzeugbediener oder andere Kraftfahrzeuginsassen das Kraftfahrzeug mit höchster Wahrscheinlichkeit verlassen wollen. Dabei kann jedes Gurtschloss ein Signal für die dem Gurtschloss am nächsten liegende Fensterscheibe abgeben, so dass nur die Fensterscheibe abgesenkt wird, welche dem Gurtschloss am nächsten liegt. Auch können, wenn der Motor ausgeschaltet ist und das Gurtschloss des Fahrersitzes ein Zustandssignal "geöffnet" abgibt, alle Fensterscheiben um den Kurzhubweg abgesenkt werden. Unter Fensterscheiben werden im Zusammenhang mit der Erfindung insbesondere seitliche Fensterscheiben verstanden, die in einem Kraftfahrzeugtürkörper, also dem Teil einer Kraftfahrzeugtür versenkbar sind, der schwenkbar an einer Kraftfahrzeugkarosserie angeordnet ist und den Zugang zum Kraftfahrzeuginnenraum seitlich begrenzt. Der Kurzhubweg, der von einer Ausgangsposition in eine abgesenkte Position reicht, sollte so bemessen sein, dass die Fensterscheibe mit ihrem oberen Rand einen berührungsfreien Abstand zu einem an einer Kraftfahrzeugkarosserie angeordneten Dichtungselementes aufweist. Bevorzugter Weise beträgt dieser Abstand 4 mm. Der Weg, den die Fensterscheibe aus der Ausgangsposition in die abgesenkte Position zurücklegt, sollte im Bereich von 8 mm bis 30 mm liegen. Unter Betätigung eines Gurtschlosses ist im Zusammenhang mit der Erfindung das durch das Betätigen eines Betätigungselementes des Gurtschlosses, insbesondere eines Tastelementes, ausgelöste Lösen einer Gurtzunge aus dem Gurtschloss zu verstehen.

In vorteilhafter Ausgestaltung der Erfindung wird das Zustandssignal an ein Steuergerät gesendet. Diese Maßnahme bietet den Vorteil, dass in einem Steuergerät mehrere Zustandssignale verarbeitet werden können und in Abhängigkeit der Beziehung der Zustandssignale zueinander ein Steuersignal abgegeben werden kann. So wäre es beispielsweise möglich, dass dem Steuergerät die Zustandssignale eines geöffneten Gurtschlosses und beispielsweise einer, durch eine Kindersicherung verschlossene Tür gesendet werden. In diesem Fall würde das Steuergerät die Kurzhubabsenkung nicht mit einem Steuersignal initiieren. Des Weiteren ist es möglich, dass das Steuergerät ein Steuersignal an den Fensterheber gibt. Dieses Steuersignal kann auch mittelbar an den Fensterheber abgegeben werden, so dass dieser in Abhängigkeit des Steuersignals bewegt wird. Das Steuersignal kann auch dazu beitragen, dass die für das Anheben der Fensterscheibe zuständigen Fahrzeugkomponenten, wie beispielsweise der Fensterheber, vor der Kurzhubabsenkung entspannt werden. Durch diese Maßnahme wird erreicht, dass die Kurzhubabsenkung schnell und mit weniger Energieaufwand vonstattengehen kann. Als Steuersignal wird im Zusammenhang mit der Erfindung ein von dem Steuergerät nach der Verarbeitung der eingegangenen Zustandssignale an andere Fahrzeugkomponenten abgegebenes Signal verstanden.

In vorteilhafter Ausgestaltung der Erfindung kann der Fensterheber in Abhängigkeit des Steuersignals des Steuergeräts bewegt werden. Durch diese Maßnahme ist es möglich, dass der Fensterherber zumindest mittelbar in Abhängigkeit der durch das Steuergerät verarbeiteten Zustandssignale bewegt wird und nur dann angesteuert wird, wenn in Abhängigkeit der unterschiedlichen Zustandssignale eine Kurzhubabsenkung erwünscht ist.

Erfindungsgemäß ist ferner ein Kraftfahrzeug mit den Merkmalen des Anspruchs 5 mit einem Gurtschloss und einer Kraftfahrzeugtür mit einer Fensterscheibe vorgesehen, die mittels eines Fensterhebers in einem Kraftfahrzeugtürkörper von einer Ausgangsposition um einen Kurzhubweg absenkbar ist. Dabei weist das Gurtschloss Mittel auf, die dazu geeignet sind, die Absenkung der Fensterscheibe zumindest mittelbar zu initiieren. Durch diese erfindungsgemäßen Maßnahmen ist ein Kraftfahrzeug bereitgestellt, das in vorteilhafter Weise die Fahrzeugkomponente Gurtschloss benutzt, um zumindest mittelbar die Kurzhubabsenkung der Fensterscheibe zu initiieren. Dies bietet den Vorteil, dass ohnehin in dem Kraftfahrzeug vorhandene Komponenten für die Kurzhubabsenkung genutzt werden. Diese Maßnahme erspart zusätzliche Fahrzeugkomponenten.

Erfindungsgemäß ist an dem Gurtschloss ein Sensor oder ein Schaltelement angeordnet. Dabei kann der Sensor als kapazitiver Sensor ausgebildet sein, um die Lage einer Gurtzunge im Gurtschloss zu bestimmen. Durch diese Maßnahme wird es ermöglicht, dass der Zustand des Gurtschlosses zuverlässig sensiert werden kann. In bevorzugter Ausgestaltung der Erfindung ist das Schaltelement als Kontaktschalter ausgebildet. Unter einem Kontaktschalter wird im Zusammenhang mit der Erfindung jede Baugruppe verstanden, die mittels zweier elektrisch leitender Materialien oder eines Halbleiterbauelementes eine elektrisch leitende Verbindung herstellen oder trennen kann. Durch die Anordnung eines Kontaktschalters wird in vorteilhafter Weise ein Mittel zur Verfügung gestellt, das dazu geeignet ist, den Zustand des Gurtschlosses zuverlässig zu ermitteln. Dabei kann der Kontaktschalter als Mikroschalter ausgebildet sein. Unter einem Mikroschalter ist ein elektrischer Schalter zu verstehen, dessen Kontakte im geöffneten Zustand nur einen geringen Abstand aufweisen, vorzugsweise weniger als 3 mm.

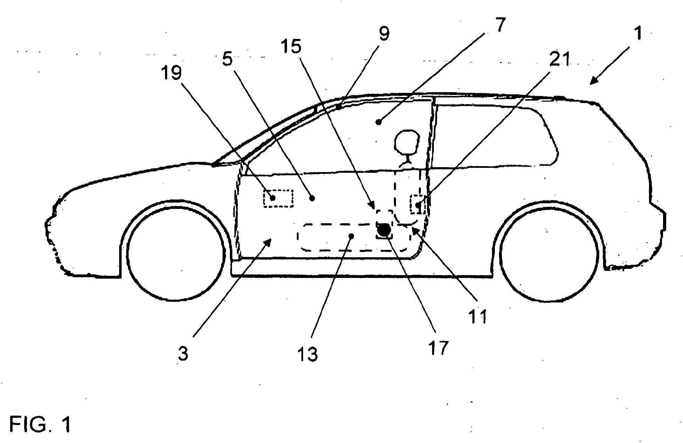

Die Erfindung wird nachfolgend anhand eines Ausführungsbeispiels in Verbindung mit der einzigen Zeichnung erläutert. Dabei zeigt die Fig. 1 in äußerst schematischer Darstellung ein Kraftfahrzeug 1 mit einer Kraftfahrzeugtür 3 und einer in einem Kraftfahrzeugtürkörper 5 versenkbaren Fensterscheibe 7. Die Fensterscheibe 7 liegt im geschlossenen Zustand in einem Dichtungselement 9 und muss beim Öffnen sowie beim Schließen der Kraftfahrzeugtür 3 um einen Kurzhubweg aus dem Dichtungselement 9 heraus abgesenkt werden. Die Kraftfahrzeugtür 3 ist rahmenlos ausgestaltet, so dass das Dichtungselement 9 an der Kraftfahrzeugkarosserie angeordnet ist. Um die Absenkung der Fensterscheibe 7 zumindest mittelbar zu beeinflussen, weist das Kraftfahrzeug 1 im Bereich eines Kraftfahrzeugsitzes 11 und dort im in Fahrtrichtung gesehen hinteren Bereich einer Kraftfahrzeugsitzfläche 13 ein Gurtschloss 15 auf. Das Gurtschloss 15 weist als Mittel einen Mikroschalter 17 auf, der dazu geeignet ist, zumindest mittelbar ein Zustandssignal an ein Steuergerät 19 zu senden. Sobald der Mikroschalter 17 geöffnet ist und ein Zustandssignal für das Gurtschloss 15 den Zustand "Gurtschloss offen" generiert wird, also eine hier nicht dargestellte Zunge eines hier nicht dargestellten Sicherheitsgurtes aus dem Gurtschloss 15 heraus bewegt wurde, wird an das Steuergerät 19 der geöffnete Zustand gemeldet. Das Steuergerät 19 sendet in diesem Fall ein Steuersignal an einen Fensterheber 21, der die Fensterscheibe 7 um einen Kurzhubweg aus dem Dichtungselement 9 heraus absenkt. Dabei umfasst der Fensterheber 21 motorische Komponenten, die zur automatischen Absenkung der Fensterscheibe 7 geeignet sind. Nachdem die Kurzhubabsenkung erfolgt ist, wartet das Steuergerät 19 auf ein Signal, das signalisiert, dass die Kraftfahrzeugtür 3 geöffnet und geschlossen wurde, um die Fensterscheibe in die geschlossene Position, in der sie in dem Dichtungselement 9 liegt, zu verfahren, oder verfährt automatisch nach Ablauf eines Zeitintervalls in diese Position.

### Bezugszeichenliste

- 1: Kraftfahrzeug
- 3: Kraftfahrzeugtür
- 5: Kraftfahrzeugtürkörper
- 7: Fensterscheibe
- 9: Dichtung
- 11: Kraftfahrzeugsitz
- 13: Kraftfahrzeugsitzfläche
- 15: Gurtschloss
- 17: Mikroschalter
- 19: Steuergerät
- 21: Fensterheber

## Patentansprüche

1. Verfahren zum Absenken einer Fensterscheibe (7), die mittels eines Fensterhebers (21) in einem Kraftfahrzeugtürkörper (5) einer Kraftfahrzeugtür (3) vor dem Öffnen der Kraftfahrzeugtür (3) nach dem Eintreffen eines Zustandssignals um einen definierten Kurzhubweg aus dem Bereich eines karosserieseitig angeordneten Dichtungselements (9) heraus motorisch abgesenkt wird, **dadurch gekennzeichnet, dass** das Zustandssignal durch das Betätigen eines Gurtschlosses (15) ausgelöst wird wobei ein Sensor oder ein Schalteinheit an dem Gurtschloss (15) angeordnet ist, um einen zustand des Gurtschlosses (15) zu erfassen.

2. Verfahren nach Anspruch 1, **dadurch gekennzeichnet, dass** das Zustandssignal an ein Steuergerät (19) gesendet wird.

3. Verfahren nach Anspruch 2, **dadurch gekennzeichnet, dass** das Steuergerät (19) ein Steuersignal an den Fensterheber (21) gibt.

4. Verfahren nach Anspruch 3, **dadurch gekennzeichnet, dass** der Fensterheber (21) in Abhängigkeit des Steuersignals des Steuergerätes (19) bewegt wird.

5. Kraftfahrzeug (1) mit einem Gurtschloss (15) und einer Kraftfahrzeugtür (3) mit einer Fensterscheibe (7), die mittels eines Fensterhebers (21) in einem Kraftfahrzeugtürkörper (5) vor dem Öffnen der Kraftfahrzeugtür (3) um einen definierten Kurzhubweg aus dem Bereich eines karosserieseitig angeordneten Dichtungselements (9) motorisch absenkbar ist, **dadurch gekennzeichnet, dass** das Gurtschloss (15) Mittel aufweist, die dazu geeignet sind, bei Betätigung des Gurtschlosses (15) die Absenkung der Fensterscheibe (7) zumindest mittelbar zu initiieren, wobei als Mittel ein Sensor oder ein Schaltelement an dem Gurtschloss (15) angeordnet ist, um einen Zustand des Gurtschlosses (15) zu erfassen.

6. Kraftfahrzeug (1) nach Anspruch 5 **dadurch gekennzeichnet, dass** das Schaltelement als Kontaktschalter ausgebildet ist.

7. Kraftfahrzeug (1) nach Anspruch 6 **dadurch gekennzeichnet, dass** das als Kontaktschalter ausgebildete Schaltelement als Mikroschalter (17) ausgebildet ist.

## Claims

1. Method for lowering a window pane (7) which is lowered by motor by a defined short travel distance from the region of a sealing element (9) arranged on the vehicle body side by means of a window lifter (21) in a motor vehicle door body (5) of a motor vehicle door (3), before the opening of the motor vehicle door (3) after the reception of a status signal, **characterized in that** the status signal is triggered by the actuation of a seatbelt lock (15), wherein a sensor or a switching unit is arranged on the seatbelt lock (15), in order to sense a status of the seatbelt lock (15).

2. Method according to Claim 1, **characterized in that** the status signal is transmitted to a control device (19).

3. Method according to Claim 2, **characterized in that** the control device (19) outputs a control signal to the window lifter (21).

4. Method according to Claim 3, **characterized in that** the window lifter (21) is moved as a function of the control signal of the control device (19).

5. Motor vehicle (1) having a seatbelt lock (15) and a motor vehicle door (3) with a window pane (7) which can be lowered by motor by a defined short travel distance from the region of a sealing element (9) arranged on the vehicle body side by means of a window lifter (21) in a motor vehicle door body (5) before the opening of the motor vehicle door (3), **characterized in that** the seatbelt lock (15) has means which are suitable for at least indirectly initiating the lowering of the window pane (7) when the seatbelt lock (15) is activated, wherein a sensor or a switching element is arranged as means on the seatbelt lock (15), in order to sense a status of the seatbelt lock (15).

6. Motor vehicle (1) according to Claim 5, **characterized in that** the switching element is embodied as a contact switch.

7. Motor vehicle (1) according to Claim 6, **characterized in that** the switching element which is embodied as a contact switch is embodied as a microswitch (17).

## Revendications

1. Procédé pour abaisser une vitre de fenêtre (7) qui est abaissée d'une course de levage courte définie par un moteur depuis la région d'un élément d'étanchéité (9) disposé du côté de la carrosserie au moyen d'un lève-glace (21) dans un corps de porte de véhicule automobile (5) d'une porte de véhicule automobile (3) avant l'ouverture de la porte de véhicule automobile (3) après l'incidence d'un signal d'état, **caractérisé en ce que** le signal d'état est déclenché par l'actionnement d'une boucle de ceinture (15), un capteur ou une unité de commutation étant disposé(e) au niveau de la boucle de ceinture (15) afin de détecter un état de la boucle de ceinture (15).

2. Procédé selon la revendication 1, **caractérisé en ce que** le signal d'état est envoyé à un appareil de commande (19).

3. Procédé selon la revendication 2, **caractérisé en ce que** l'appareil de commande (19) fournit un signal de commande au lève-glace (21).

4. Procédé selon la revendication 3, **caractérisé en ce que** le lève-glace (21) est déplacé en fonction du signal de commande de l'appareil de commande (19).

5. Véhicule automobile (1) comprenant une boucle de ceinture (15) et une porte de véhicule automobile (3) avec une vitre de fenêtre (7) qui peut être abaissée d'une course de levage courte définie par un moteur depuis la région d'un élément d'étanchéité (9) disposé du côté de la carrosserie au moyen d'un lève-glace (21) dans un corps de porte de véhicule automobile (5) avant l'ouverture de la porte de véhicule automobile (3), **caractérisé en ce que** la boucle de ceinture (15) présente des moyens qui sont aptes à amorcer au moins indirectement, lors de l'actionnement de la boucle de ceinture (15), l'abaissement de la vitre de fenêtre (7), un capteur ou un élément de commutation étant disposé en tant que moyen au niveau de la boucle de ceinture (15) pour détecter un état de la boucle de ceinture (15).

6. Véhicule automobile (1) selon la revendication 5, **caractérisé en ce que** l'élément de commutation est réalisé sous forme d'interrupteur de contact.

7. Véhicule automobile (1) selon la revendication 6, **caractérisé en ce que** l'élément de commutation réalisé sous forme d'interrupteur de contact est réalisé sous forme de minirupteur (17).
